# DEMANDE DE BREVET EUROPEEN

(11) **EP 3 431 282 A1**
(43) Date de publication de la demande: **23.01.2019**
(21) Numéro de dépôt: 18183854.1
(22) Date de dépôt: 17.07.2018
(51) Int. Cl.: B32B 27/00, C08L 23/00, C08L 51/00, H01B 3/00, F21S 45/00

(54) **DISPOSITIF LUMINEUX DE VÉHICULE AUTOMOBILE COMPRENANT UN ADDITIF POLAIRE**

(30) Priorité: 17.07.2017 FR 1756732
(71) Demandeur: Valeo Vision, 93012 Bobigny Cedex (FR)
(72) Inventeur: GRATECAP, François, 49000 ANGERS (FR); FAOUCHER, Erwan, 49000 ANGERS (FR)
(74) Mandataire: Valeo Vision

(57) **Abrégé**

L'invention concerne un dispositif lumineux de véhicule automobile comprenant au moins un élément polymère moulé obtenu à partir d'une composition polymère comprenant au moins un matériau polymère thermoplastique et au moins un additif polaire, différent du matériau polymère thermoplastique.

## Description

L'invention concerne un dispositif lumineux de véhicule automobile comprenant un élément polymère obtenu à partir d'une composition polymère comprenant un matériau polymère thermoplastique et au moins un additif polaire. L'invention concerne également un procédé de fabrication dudit dispositif de véhicule automobile.

Un dispositif lumineux de véhicule automobile comprend au moins une source lumineuse ainsi que différents éléments optiques comme par exemple un réflecteur, une optique de projection et/ou une glace permettant de fermer le dispositif lumineux. Les différents éléments d'un dispositif lumineux sont en général réalisés en un matériau polymère.

Ces éléments polymères sont classiquement fabriqués avec une presse d'injection plastique comprenant un moule d'injection, à partir d'une composition polymère qui est ramollie par une élévation de température puis injectée dans le moule, et ensuite refroidie.

Afin de réduire la quantité de composition polymère utilisée et donc de réduire les coûts de fabrication, il est possible de fabriquer des éléments polymères ayant des épaisseurs réduites. Cependant, si l'on souhaite réduire l'épaisseur d'un l'élément polymère, il est nécessaire que le moule dans lequel la composition polymère est injectée possède une structure plus affinée (i.e. des reliefs et/ou cavités affinés). Toutefois, des reliefs et/ou cavités affinés offrent une résistance à l'écoulement de la composition polymère ramollie plus importante. La fabrication de l'élément polymère nécessite alors des pressions d'injection plus importantes, et donc des unités d'injection plus puissantes et souvent plus volumineuses.

La présente invention a donc pour but de pallier les inconvénients de l'art antérieur en proposant un dispositif lumineux de véhicule automobile comprenant au moins un élément polymère léger et de faible épaisseur, tout en ayant des propriétés mécaniques optimisées.

La présente invention a ainsi pour objet un dispositif lumineux de véhicule automobile comprenant au moins un élément polymère, de préférence moulé, obtenu à partir d'une composition polymère comprenant au moins un matériau polymère thermoplastique et au moins un additif polaire, différent du matériau polymère thermoplastique.

Avantageusement, l'ajout d'au moins un additif polaire au(x) matériau(x) polymère(s) thermoplastique(s) permet de réduire les frottements entre la composition polymère et les reliefs et/ou cavités du moule dans lequel la composition polymère est destinée à être injectée. Il est ainsi possible de réduire la pression avec laquelle la composition polymère est injectée dans le moule même lorsque les reliefs et/ou cavités du moule sont affinés. La composition polymère permet alors de fabriquer des éléments polymères plus de faible épaisseur et donc plus légers, ce qui réduit les coûts de fabrication. En effet, la fabrication d'éléments polymères de faible épaisseur permet de réduire la quantité de composition polymère utilisée et de réduire également le temps de fabrication, notamment le temps de cycle tel que le temps d'injection dans le moule et le temps de refroidissement de l'élément polymère. En outre, la présence d'au moins un additif polaire dans la composition polymère ne modifie sensiblement pas les propriétés mécaniques de l'élément polymère, et garantit ainsi des propriétés mécaniques optimisées à l'élément polymère du dispositif lumineux.

Ainsi, le dispositif lumineux comprenant l'élément polymère obtenu selon l'invention est plus léger et a un coût de fabrication réduit par rapport aux dispositifs lumineux de l'art antérieur, tout en ayant de bonnes propriétés mécaniques.

Dans l'invention, on entend par « additif polaire » un composé comprenant des charges partielles positives et négatives, le barycentre des charges partielles positives ne coïncidant pas avec le barycentre des charges partielles négatives. Les charges partielles positives et négatives apparaissent dans des liaisons covalentes polaires, en particulier dans des liaisons covalentes entre deux atomes ou groupements d'atomes d'électronégativité différente, par exemple des liaisons covalentes entre un atome de carbone ou un atome d'hydrogène et un atome choisi parmi un atome d'oxygène, d'azote, de soufre, de fluor, de chlore, de brome, d'iode, ou de phosphore.

### L'additif polaire

Dans l'invention, l'additif polaire peut comprendre au moins une fonction polaire, de préférence une fonction électronégative.

Dans l'invention, une fonction est définie comme un atome différent d'un atome de carbone ou d'hydrogène, ou comme un groupement d'atomes comprenant un ou plusieurs atome(s) différent(s) d'un atome de carbone ou d'hydrogène.

De préférence, l'additif polaire de l'invention peut comprendre au moins une fonction choisie parmi une fonction fluorée, une fonction azotée, et un de leurs mélanges.

Dans l'invention, une fonction fluorée peut être par exemple un groupement d'atomes comprenant un ou plusieurs atome(s) de fluor, de préférence combiné(s) avec un ou plusieurs atome(s) de carbone et/ou d'hydrogène. Une fonction fluorée selon l'invention peut être une fonction alkyle fluoré ou alcène fluorée choisie parmi (-CR₂F), (-CRF₂), (-CF₃), (-CR=CRF), (-CR=CF₂), (-CF=CRF), (-CF=CF₂), (-CF=CR₂), et un de leurs mélanges, R pouvant être choisi parmi un atome d'hydrogène, une chaîne aliphatique ou un groupement aryle. Lorsqu'une fonction fluorée comprend plusieurs groupements R, ils peuvent être identiques ou différents.

Dans l'invention, la chaîne aliphatique peut être linéaire, cyclique, et/ou ramifiée, peut comprendre une ou plusieurs insaturation(s), et peut en outre comprendre une ou plusieurs fonction(s) telle(s) que définie(s) dans l'invention.

Dans l'invention, une fonction fluorée peut aussi être une fonction aryle comprenant 1 à 5 atomes de fluor, les atomes de fluor étant placés sur les positions ortho, méta et/ou para du cycle aromatique. Le cycle aromatique peut en outre comprendre une fonction différente d'une fonction fluorée.

Dans l'invention, une fonction azotée peut être par exemple un groupement d'atomes comprenant un ou plusieurs atome(s) d'azote, de préférence combiné(s) avec un ou plusieurs atome(s) de carbone et/ou d'hydrogène. La fonction azotée peut être cyclique ou non cyclique et peut être choisie parmi une fonction amine (-NR₃), une fonction amide (-CONR₂), une fonction nitrile (-CN), une fonction imine (-CR=NR), une fonction imide (-CO-NR-CO-), et un de leurs mélanges, R pouvant être choisi parmi un atome d'hydrogène, un groupement aliphatique ou un groupement aryle. Lorsqu'une fonction azotée comprend plusieurs groupements R, ils peuvent être identiques ou différents.

Dans l'invention, une fonction azotée peut également être un cycle azoté choisi parmi une pyridine, un pyrrole, un indole, une pyrrolidine, une pyrroline, un pyrazole, un imidazole, un triazole, et un de leurs mélanges.

Selon un premier mode de réalisation de l'invention, l'additif polaire peut comprendre au moins un polymère, le polymère étant choisi de préférence parmi un polymère fluoré, un polymère azoté, et un de leurs mélanges.

Dans l'invention, un polymère fluoré est un polymère comprenant dans la chaîne macromoléculaire et/ou dans les ramifications au moins une fonction fluorée telle que définie dans l'invention.

Dans l'invention, un polymère azoté est un polymère comprenant dans la chaîne macromoléculaire et/ou dans les ramifications au moins une fonction azotée telle que définie dans l'invention.

Selon ce mode de réalisation, l'additif polaire peut avoir une température de transition vitreuse (Tg) d'au moins 50°C, et de préférence d'au moins 100°C.

Selon ce premier mode de réalisation, un polymère fluoré peut être un polymère comprenant une fonction fluorée telle que définie dans l'invention. Le polymère fluoré peut être par exemple choisi parmi le polyfluorure de vinyle (PVF), le polyfluorure de vinylidène (PVDF), le polytétrafluoroéthylène (PTFE), le polychlorotrifluoroéthylène (PCTFE), le perfluoroalkoxy (PFA), l'éthylène propylène fluoré (FEP), l'éthylène tétrafluoroéthylène (ETFE), le polyéthylènechlorotrifluoroéthylène (ECTFE), le perfluoropolyéther (PFPE), le perfluoropolyoxétane, le fluorure de vinylidène, l'hexafluoropropène, le copolymère de vinylidène et d'hexafluoropropène, et un de leurs mélanges.

Selon ce mode de réalisation, il est possible d'utiliser par exemple le composé commercialisé par la société 3M, sous la référence Polymer Processing Additive FX 5920A, comprenant un additif polaire tel que défini dans l'invention, ou le composé commercialisé par la société Arkema sous la référence Kynar Flex, comprenant un additif polaire tel que défini dans l'invention.

Selon ce premier mode de réalisation, un polymère azoté peut être un polymère comprenant une fonction azotée telle que définie dans l'invention. Le polymère azoté peut être par exemple choisi parmi le butadiène-acrylonitrile (NBR), l'acrylonitrile-butadiène-styrène (ABS), l'acrylonitrile-styrène-acrylate (ASA), l'acrylonitrile-méthacrylate de méthyle (AMMA), le polyacrylonitrile (PAN), le polyamide-imide (PAI), le polyamide (PA), le polyétherimide (PEI), le polyimide (PI), le styrène-acrylonitrile (SAN), et un de leurs mélanges.

Selon un deuxième mode de réalisation de l'invention, l'additif polaire peut comprendre un composé différent d'un polymère, comprenant notamment au moins une chaîne carbonée, notamment aliphatique, et une fonction choisie parmi une fonction fluorée, une fonction azotée, et un de leurs mélanges.

Selon ce mode de réalisation, l'additif polaire peut avoir un point de goutte (dropping point) selon la norme ASTM D-566 (ou ASTM D-2265), d'au moins 50°C, et de préférence d'au moins 100°C.

Selon ce deuxième mode de réalisation, l'additif polaire peut comprendre au moins une chaine carbonée, notamment aliphatique, de préférence une chaîne aliphatique comprenant de 4 à 40 atomes de carbone.

Selon une variante préférée, l'additif polaire peut comprendre une chaîne aliphatique et une fonction amide ou une fonction nitrile. Selon cette variante, l'additif polaire peut comprendre un composé choisi parmi l'hexadecanamide, l'octadecanamide, l'hexadecanenitrile, l'octadecanenitrile, et un de leurs mélanges.

Selon ce mode de réalisation, l'additif polaire peut comprendre un dérivé d'acide gras. Dans l'invention, un acide gras peut être un acide carboxylique comprenant une chaîne aliphatique (R') telle que définie dans l'invention comprenant 4 à 40 atomes de carbone, l'acide carboxylique étant du type R'-C(=O)OH. Un dérivé d'acide gras correspond à un acide gras dont le groupement -OH de l'acide carboxylique a été remplacé par un groupement du type X(H)R dans lequel X peut être :
- un atome choisi parmi l'oxygène, l'azote, ou le souffre, ou
- un groupement d'atomes pouvant être choisi parmi -OC(=O)-, -NC(=O)-, ou -SC(=O)-,
le groupement R pouvant être une chaîne aliphatique telle que définie dans l'invention.

Selon une variante préférée, le dérivé d'acide gras est choisi parmi un ester d'acide gras (R'-C(=O)-OR), un amide d'acide gras (R' -C(=O)-NR), et un de leurs mélanges.

Selon ce deuxième mode de réalisation, il est possible d'utiliser par exemple le composé commercialisé par la société AXEL sous la référence INT-33UDS, ce composé comprenant un additif polaire tel que défini dans l'invention.

Selon un troisième mode de réalisation de l'invention, l'additif polaire peut comprendre au moins un polymère selon le premier mode de réalisation et au moins un composé différent d'un polymère selon le deuxième mode de réalisation.

### Le matériau polymère thermoplastique

Dans l'invention, la composition polymère comprend également un matériau polymère thermoplastique.

Le matériau polymère thermoplastique selon l'invention peut comprendre au moins un polymère choisi parmi le polycarbonate (PC), le polycarbonate modifié haute température (PC-HT), le polyméthacrylate de méthyle (PMMA), le polytéréphtalate de butylène (PBT), l'acrylonitrile-butadiène-styrène (ABS), un polymère à cristaux liquides (LCP), le polytéréphtalate d'éthylène (PET), le copolymère d'acrylonitrile-butadiène-styrène et de polycarbonate (ABS/PC), le polysulfure de phénylène (PPS), le polyoxyméthylène (POM), le polypropylène (PP), le styrène-acrylonitrile (SAN), un polymère d'oléfine (i.e. une polyoléfine), le polyuréthane (PU), le poly-N-méthyl métacrylimide (PMMI), un polymère de cyclooléfine (COP), un copolymère de cyclooléfine (COC), une polysulfone (PSU), un polyarylate (PAR), le polyamide transparent (PA), et un de leurs mélanges.

Selon un mode de réalisation préféré, le matériau polymère thermoplastique peut comprendre au moins un polymère choisi parmi le polycarbonate (PC), le polyméthacrylate de méthyle (PMMA), et un de leurs mélanges.

### La Composition polymère

La composition polymère de l'invention comprend au moins un matériau polymère thermoplastique et au moins un additif polaire, différent du matériau polymère thermoplastique

Selon l'invention, la composition polymère peut comprendre au plus 5,0% en poids d'additif polaire, de préférence au plus 1,0% en poids d'additif polaire, de préférence au plus 0,5% en poids d'additif polaire, et plus préférentiellement au plus 0,1% en poids d'additif polaire, par rapport au poids total de la composition polymère.

L'utilisation d'une quantité d'additif polaire d'au plus 5,0% en poids dans la composition polymère permet avantageusement de réduire les frottements entre la composition polymère et les reliefs et/ou cavités du moule dans lequel la composition polymère est destinée à être injectée. Une faible quantité d'additif polaire dans la composition polymère permet donc de réduire le coût et/ou le temps de fabrication de l'élément polymère.

Selon l'invention, la composition polymère peut comprendre au moins 0,001% en poids d'additif polaire, de préférence au moins 0,01% en poids d'additif polaire, et plus préférentiellement au moins 0,03% en poids d'additif polaire, par rapport au poids total de la composition polymère.

Selon l'invention, la composition polymère comprend plus de 50,0% en poids de matériau polymère thermoplastique, de préférence au moins 80,0% en poids de matériau polymère thermoplastique, de préférence au moins 90,0% en poids de matériau polymère thermoplastique, de préférence au moins 95,0% en poids de matériau polymère thermoplastique, et plus préférentiellement au moins 99,0% en poids de matériau polymère thermoplastique, par rapport au poids total de la composition polymère.

Selon l'invention, la composition polymère peut en outre comprendre au moins un additif, notamment bien connu de l'homme du métier et pouvant être choisis parmi :
- des agents colorants tels que des pigments ;
- des agents anti-UV ;
- des agents de protection tels que des antioxydants ;
- des agents de mise en oeuvre, tels que des plastifiants, des lubrifiants, des huiles, des agents de viscosité, des agents fluidifiants ;
- des agents de réticulation, tels que par exemple des peroxydes organiques ; et
- un de leurs mélanges.

Selon un mode de réalisation préféré, la composition polymère peut comprendre au moins un additif choisi parmi un agent lubrifiant, un agent de viscosité, un agent fluidifiant, et un de leurs mélanges.

### Dispositif de véhicule automobile

La présente invention concerne un dispositif lumineux de véhicule automobile comprenant un élément polymère, de préférence moulé, obtenu à partir de la composition polymère de l'invention.

Le dispositif lumineux de véhicule automobile peut être par exemple un dispositif d'éclairage et/ou de signalisation lumineuse.

A titre d'exemple, le dispositif lumineux peut être un feu avant (projecteur) ou un feu arrière de véhicule automobile, ou un dispositif d'éclairage intérieur de véhicule automobile. De façon plus particulière, le dispositif lumineux pourra comprendre un ou plusieurs des éléments suivants : un feu de route, un feu de croisement, un feu de signalisation diurne, une lanterne, un feu stop, un indicateur de direction, un feu antibrouillard.

Le dispositif lumineux de véhicule automobile peut comprendre au moins un module lumineux comprenant classiquement une source lumineuse, une optique de mise en forme et éventuellement un masque permettant de protéger et dissimuler les éléments inesthétiques.

Le dispositif lumineux selon l'invention peut comprendre en outre un boîtier pour dispositif lumineux, et notamment pour projecteur automobile. Ledit boîtier peut être classiquement fermé par une glace, ledit au moins ledit module lumineux étant placé dans ledit boîtier.

L'élément polymère de l'invention peut être par exemple un masque (esthétique) de module lumineux, une glace, un guide optique, un réflecteur, ou un boitier.

### Procédé

Un autre objet de l'invention concerne un procédé de fabrication du dispositif de véhicule automobile comprenant au moins un élément polymère.

Le procédé de fabrication du dispositif de véhicule automobile comprenant au moins un élément polymère, selon l'invention, peut comprendre les étapes suivantes :
i. mélanger ledit matériau polymère thermoplastique à l'état fondu avec ledit additif polaire,
ii. injecter le mélange dans un moule, pour former l'élément polymère.

Dans l'invention, on entend par « état fondu » un état dans lequel le matériau polymère thermoplastique de l'étape i est dans un état malléable. Cet état malléable, bien connu de l'homme du métier, peut être classiquement atteint lorsque le polymère en question est chauffé à une température supérieure à sa température de transition vitreuse ou température de ramollissement.

L'élément polymère est fabriqué avec une presse d'injection à partir de la composition polymère de l'invention. Le matériau polymère thermoplastique, de préférence sous forme de granulés, peut être mélangé, avant l'étape i, dans un mélangeur classique avec l'additif polaire, à une température inférieure à la température de transition vitreuse (Tg) du matériau polymère thermoplastique, par exemple à 25°C, formant ainsi une composition polymère à l'état solide.

La composition polymère obtenue peut être ensuite chauffée à une température supérieure ou égale à la température de transition vitreuse (Tg) du matériau polymère thermoplastique (étape i). Enfin, la composition obtenue à l'étape i peut être injectée sous pression dans un moule (étape ii), afin de former un élément polymère moulé.

Dans le procédé de l'invention, l'étape ii d'injection peut être réalisée à une pression d'au moins 500 bar, de préférence d'au moins 900 bar, et plus préférentiellement d'au moins 1200 bar.

Dans le procédé de l'invention, l'étape ii d'injection peut être réalisée à une pression d'au plus 2500 bar, de préférence d'au plus 2100 bar, et plus préférentiellement d'au plus 1900 bar.

De façon avantageuse, la présence d'au moins un additif polaire dans la composition polymère permet de réduire les frottements entre la composition polymère et le moule dans lequel la composition polymère est injectée. La pression avec laquelle la composition est injectée dans le moule est donc réduite significativement. Il est ainsi possible de fabriquer un élément polymère de même épaisseur que dans l'art antérieur avec une pression réduite. Il est également possible de fabriquer un élément polymère d'épaisseur réduite sans augmentation significative de pression par rapport aux procédés de l'art antérieur.

Le procédé de l'invention peut en outre comprendre une étape iii de refroidissement de l'élément polymère. La température de refroidissement peut être avantageusement liée à l'épaisseur de l'élément polymère.

De façon avantageuse, le procédé de l'invention permet de réduire le coût de fabrication du dispositif lumineux comprenant l'élément polymère. En outre, lorsque le procédé est utilisé pour fabriquer un élément polymère d'épaisseur réduite, le coût de fabrication est diminué puisqu'une quantité plus faible de composition polymère est utilisée. Par ailleurs, le temps de fabrication est également diminué par diminution du temps de cycle, en particulier :
- la diminution du temps de mélange du matériau polymère thermoplastique et de l'additif polaire,
- la diminution du temps de chauffage de la composition polymère,
- la diminution du temps d'injection de la composition polymère dans le moule, et/ou
- la diminution du temps de refroidissement de l'élément polymère.

D'autres caractéristiques et avantages de la présente invention apparaîtront à la lumière de la description d'exemples non limitatifs.

### Exemples

Dans les deux exemples de l'invention :
- le moule utilisé est un moule du type masque principal en acier, et
- la presse d'injection plastique utilisée est du type Engel Hydraulique.

### Exemple 1 (exemple selon l'invention):

Le matériau polymère thermoplastique est un polycarbonate (Tg = 145°C), commercialisé par la société Covestro, sous la référence Makrolon PC2405.

L'additif polaire est présent à environ 10% en poids dans le produit commercialisé par la société Axel sous la référence INT-33UDS.

Ainsi, la composition polymère comprend 99,5% en poids de polycarbonate et 0,5% en poids du produit INT-33UDS.

Le polycarbonate sous forme de granulés est mélangé avec l'additif polaire dans un mélangeur classique à 25°C.

Le mélange solide obtenu peut être ensuite mélangé à une température de 280-320°C, au moyen d'un mélangeur interne bien connu de l'homme du métier. A cette température, le matériau polymère thermoplastique se retrouve à l'état fondu.

La composition polymère est alors injectée dans le moule grâce à une vis d'injection, à une pression de 1650 bar, pour fabriquer un masque d'un module lumineux de véhicule automobile.

L'élément polymère est alors refroidit à une température de 80°C durant 25 secondes.

### Exemple 2 (exemple comparatif):

Le matériau polymère thermoplastique est un polycarbonate (Tg = 145°C), commercialisé par la société Covestro, sous la référence Makrolon PC2405.

Aucun additif polaire n'est utilisé.

Ainsi, la composition polymère comprend 100% en poids de polycarbonate.

Le polycarbonate sous forme de granulés est chauffé à une température de 280-320°C.

La composition polymère est alors injectée dans le moule grâce à une vis d'injection, à une pression de 1900 bar, pour fabriquer un masque d'un module lumineux de véhicule automobile.

L'élément polymère est alors refroidit à une température de 80°C durant 35 secondes.

L'élément polymère moulé de type masque d'un module lumineux de véhicule automobile, fabriqué à partir d'une composition polymère selon l'invention (exemple 1), permet de réaliser l'injection de ladite composition polymère avec un gain de pression de 18% pour une épaisseur équivalent, par rapport à un élément polymère moulé obtenu selon l'exemple comparatif (exemple 2), le même moule étant utilisé dans les exemples 1 et 2.

## Revendications

1. Dispositif lumineux de véhicule automobile comprenant au moins un élément polymère moulé obtenu à partir d'une composition polymère comprenant au moins un matériau polymère thermoplastique et au moins un additif polaire, différent du matériau polymère thermoplastique.

2. Dispositif lumineux selon la revendication 1, **caractérisé en ce que** l'additif polaire comprend au moins une fonction choisie parmi une fonction fluorée, une fonction azotée, et un de leurs mélanges.

3. Dispositif lumineux selon la revendication 1 ou 2, **caractérisé en ce que** l'additif polaire comprend au moins un polymère choisi parmi un polymère fluoré, un polymère azoté, et un de leurs mélanges.

4. Dispositif lumineux selon la revendication 3, **caractérisé en ce que** l'additif polaire a une température de transition vitreuse (Tg) d'au moins 50°C, et de préférence d'au moins 100°C.

5. Dispositif lumineux selon la revendication 3 ou 4, **caractérisé en ce que** le polymère fluoré est choisi parmi le polyfluorure de vinyle (PVF), le polyfluorure de vinylidène (PVDF), le polytétrafluoroéthylène (PTFE), le polychlorotrifluoroéthylène (PCTFE), le perfluoroalkoxy (PFA), l'éthylène propylène fluoré (FEP), l'éthylène tétrafluoroéthylène (ETFE), le polyéthylènechlorotrifluoroéthylène (ECTFE), le perfluoropolyéther (PFPE), le perfluoropolyoxétane, le fluorure de vinylidène, l'hexafluoropropène, le copolymère de vinylidène et d'hexafluoropropène, et un de leurs mélanges.

6. Dispositif lumineux selon la revendication 3 ou 4, **caractérisé en ce que** le polymère azoté est choisi parmi le butadiène-acrylonitrile (NBR), l'acrylonitrile-butadiène-styrène (ABS), l'acrylonitrile-styrène-acrylate (ASA), l'acrylonitrile-méthacrylate de méthyle (AMMA), le polyacrylonitrile (PAN), le polyamide-imide (PAI), le polyamide (PA), le polyétherimide (PEI), le polyimide (PI), le styrène-acrylonitrile (SAN), et un de leurs mélanges.

7. Dispositif lumineux selon l'une quelconque des revendications précédentes, **caractérisé en ce que** l'additif polaire comprend au moins une chaine aliphatique, de préférence une chaîne aliphatique comprenant de 4 à 40 atomes de carbone.

8. Dispositif lumineux selon la revendication 7, **caractérisé en ce que** l'additif polaire comprend un dérivé d'acide gras.

9. Dispositif lumineux selon la revendication 8, **caractérisé en ce que** le dérivé d'acide gras est choisi parmi un ester d'acide gras, un amide d'acide gras, et un de leurs mélanges.

10. Dispositif lumineux selon l'une quelconque des revendications précédentes, **caractérisé en ce que** le matériau polymère thermoplastique comprend au moins un polymère choisi parmi le polycarbonate (PC), le polycarbonate modifié haute température (PC-HT), le polyméthacrylate de méthyle (PMMA), le polytéréphtalate de butylène (PBT), l'acrylonitrile-butadiène-styrène (ABS), un polymère à cristaux liquides (LCP), le polytéréphtalate d'éthylène (PET), le copolymère d'acrylonitrile-butadiène-styrène et de polycarbonate (ABS/PC), le polysulfure de phénylène (PPS), le polyoxyméthylène (POM), le polypropylène (PP), le styrène-acrylonitrile (SAN), un polymère d'oléfine, le polyuréthane (PU), le poly-N-méthyl métacrylimide (PMMI), un polymère de cyclooléfine (COP), un copolymère de cyclooléfine (COC), une polysulfone (PSU), un polyarylate (PAR), le polyamide transparent (PA), et un de leurs mélanges.

11. Dispositif lumineux selon l'une quelconque des revendications précédentes, **caractérisé en ce que** la composition polymère comprend au plus 5,0% en poids d'additif polaire, de préférence au plus 1,0% en poids d'additif polaire, et plus préférentiellement au plus 0,5% en poids d'additif polaire, par rapport au poids total de la composition polymère.

12. Dispositif lumineux selon l'une quelconque des revendications précédentes, **caractérisé en ce que** la composition polymère comprend plus de 50,0% en poids de matériau polymère thermoplastique, de préférence au moins 80,0% en poids de matériau polymère thermoplastique, et plus préférentiellement au moins 95,0% en poids de matériau polymère thermoplastique, par rapport au poids total de la composition polymère.

13. Procédé de fabrication d'un dispositif de véhicule automobile comprenant au moins un élément polymère, selon l'une quelconque des revendications précédentes, **caractérisé en ce qu'**il comprend les étapes suivantes :
i. mélanger ledit matériau polymère thermoplastique à l'état fondu avec ledit additif polaire,
ii. injecter le mélange dans un moule, pour former l'élément polymère.

14. Procédé de fabrication selon la revendication 13, **caractérisé en ce que** l'étape ii d'injection est réalisée à une pression d'au plus 2500 bar, de préférence d'au plus 2100 bar, et plus préférentiellement d'au plus 1900 bar.
